# EUROPÄISCHE PATENTSCHRIFT

(11) **EP 1 589 035 B1**
(45) Veröffentlichungstag und Bekanntmachung des Hinweises auf die Patenterteilung: **25.05.2016**
(21) Anmeldenummer: 05007938.3
(22) Anmeldetag: 12.04.2005
(51) Int. Cl.: C08B 11/193

(54) **Verfahren zur Herstellung von Methylhydroxyalkylcellulose**
Process for the preparation of methylhydroxyalkylcellulose
Procédé de préparation de méthylhydroxyalkylcellulose

(30) Priorität: 21.04.2004 DE 102004019296
(43) Veröffentlichungstag der Anmeldung: 26.10.2005
(73) Patentinhaber: Dow Global Technologies LLC, Midland, MI 48674 (US)
(72) Erfinder: Schlesiger, Hartwig, Dr., 29683 Bad Fallingbostel (DE); Dannhorn, Wolfgang, Dr., 29614 Soltau (DE); Klohr, Erik-Andreas, Dr., 29664 Walsrode (DE); Kowollik, Martin, 29683 Bad Fallingbostel (DE); Schmidt, Marc Oliver, 61462 Königstein (DE)
(74) Vertreter: f & e patent

(56) Entgegenhaltungen:
- EP-A- 1 279 680
- US-A- 4 550 161
- US-A1- 2002 038 018
- US-A1- 2003 065 165
- US-B1- 6 235 893

## Beschreibung

Die hier beschriebene Erfindung betrifft ein Verfahren zur industriellen Herstellung von Methylhydroxyalkylcellulosen (MHAC), vorzugsweise Methylhydroxyethylcellulose (MHEC) und Methylhydroxypropylcellulose (MHPC).

Es ist bekannt, dass Methylcellulose (MC) und ihre genannten Mischether in einem mehrstufigen Prozess hergestellt werden. In der ersten Stufe wird die eingesetzte Cellulose auf ein gewünschtes Teilchengrößenspektrum gemahlen. In der zweiten Stufe wird die gemahlene Cellulose mit einer konzentrierten wässrigen Lösung eines Alkalihydroxids, insbesondere Natriumhydroxid, in einem Mischer innig vermengt und zur Alkalicellulose aktiviert.

Die bekannten Verfahren sind die Sprühalkalisierung in einem geeignetem Mischaggregat, bei der die gemahlenen Cellulose mit Alkalilösung besprüht wird. Beim Slurry-Verfahren wird die gemahlene Cellulose in einem Suspensionsmedium (Nicht-Lösungsmittel) aufgeschlemmt und dann das Alkali zugegeben. Beim Maisch-Alkalisierverfahren wird die Cellulose in Natronlauge aufgeschlemmt und anschließend durch Schneckenpressen oder Siebtrommelpressen geführt.

In der dritten Stufe erfolgt die heterogene Reaktion mit Chlormethan und den Hydroxyalkylierungsmitteln wie Ethlyenoxid und/oder Propylenoxid.

Die weiteren Prozessstufen beinhalten die Reinigung der Celluloseether, die Mahlung und Trocknung.

Eine Schwierigkeit bei der industriellen Herstellung von MC und MHAC besteht darin, dass die Alkalisierung, insbesondere aber die Veretherung mit Chlormethan, Ethylenoxid und Propylenoxid exotherme Reaktionsstufen mit erheblicher Freisetzung von Wärme sind. Wird nun im Slurry-Verfahren Dimethylether und / oder Chlormethan als Suspensionsmedium (Slurry) eingesetzt, so ist die Temperaturerhöhung mit einem gleichzeitigem Druckanstieg verbunden sind.

Des weiteren müssen MC und MHAC mit unterschiedlichen Substitutionsgraden herstellbar sein, um Produkte für unterschiedlichste Anwendungsbereiche bereitstellen zu können.

Die Alkylsubstitution wird in der Celluloseether-Chemie allgemein durch den DS beschrieben. Der DS ist die mittlere Anzahl an substituierten OH-Gruppen pro Anhydroglucoseeinheit. Die Methylsubstitution wird beispielsweise als DS (Methyl) oder DS (M) angegeben.

Üblicherweise wird die Hydroxyalkylsubstitution durch den MS beschrieben. Der MS ist die mittlere Anzahl von Molen des Veretherungsreagenz, die pro Mol Anhydroglucoseeinheit etherartig gebunden sind. Die Veretherung mit dem Veretherungsreagenz Ethylenoxid wird beispielsweise als MS (Hydroxyethyl) oder MS (HE) angegeben. Die Veretherung mit dem Veretherungsreagenz Propylenoxid wird dementsprechend als MS (Hydroxypropyl) oder MS (HP) angegeben.

Die Bestimmung der Seitengruppen erfolgt anhand der Zeisel-Methode (Literatur: G. Bartelmus und R. Ketterer, Z. Anal. Chem. 286 (1977) 161-190).

Über den Grad der Veretherung und die Art der Substituenten werden verschiedene Eigenschaften der Produkte eingestellt, wie z.B. der thermische Flockpunkt, die Löslichkeit, die Viskosität, das Filmbildevermögen, das Wasserrückhaltevermögen und die Klebkraft. MC und MHAC werden in unterschiedlichen Anwendungsbereichen, beispielsweise als Konsistenzregler und Verarbeitungshilfsmittel in mineralischen und dispersionsbasierenden Baustoffsystemen oder bei der Herstellung von kosmetischen und pharmazeutischen Präparaten, eingesetzt. Celluloseether mit hohen Substitutionsgraden sind auch als Verdicker für organische Lösungsmittel geeignet.

Eine übersichtliche Darstellung der chemischen Grundlagen und Prinzipien der Herstellung (Herstellverfahren und Verfahrensschritte) sowie eine stoffliche Zusammenstellung und Beschreibung der Eigenschaften und Anwendungsmöglichkeiten der verschiedenen Derivate gibt beispielsweise Houben-Weyl, Methoden der Organischen Chemie, Makromolekulare Stoffe, 4. Auflage, Band E 20, S. 2042 (1987).

Bei der Herstellung von MC und MHAC führt ein molarer Überschuss Chlormethan zu Alkalihydroxid am Ende der Veretherung zu einer höheren Reaktionsgeschwindigkeit und somit kürzeren Reaktionszeiten im Vergleich zu exakt stoichiometrisch eingesetzten Reagenzmengen. Daher ist ein molarer Chlormethanüberschuss am Ende der Reaktion gewünscht.

Nachteilhaft ist hierbei jedoch, dass diese Überschussmenge an Chlormethan mit dem inerten Suspensionsmittel gemischt ist. Dieses Gemisch muss entweder getrennt werden, verworfen und entsorgt werden oder wieder eingesetzt werden.

Die Trennung des Stoffgemisches wäre mit zusätzlichem apparativem und energetischem Aufwand und somit zusätzlichen Kosten verbunden. Die Entsorgung würde zu einem erhöhten Einsatz an Reagenzien pro Reaktionsansatz führen und somit zu zusätzlichen Kosten.

Der erneute Einsatz dieses Stoffgemisches ist möglich, jedoch sind dann die vorteilhaften molaren Verhältnisse bzgl. der Reagenzien, wie sie beispielsweise in der EP-A-1 180 526 beschrieben werden, nicht mehr einzuhalten.

Die Anmeldeschrift WO 00/59947 beschreibt ein Verfahren zur Herstellung von Methylcellulose und Methylcellulosederivaten mit erhöhter "gel strength", welches dadurch gekennzeichnet ist, dass in einem ersten Schritt Cellulose mit einer ersten Menge wässrigen Alkalihydroxids und einer ersten Menge Methylierungsmittel umgesetzt wird und anschließend die im ersten Schritt veretherte Cellulose in einem zweiten Schritt mit einer zweiten Menge wässrigen Alkalihydroxids und einer zweiten Menge Methylierungsmittel umgesetzt wird.

Leider wird keinerlei Aussage gemacht, welche Verhältnisse von wässrigem Alkalihydroxid zu Methylierungsmittel vorteilhaft eingesetzt werden sollen. Aus dem Text geht hervor, dass das Alkalihydroxid vor dem Methylierungsmittel eingesetzt wird, da die Zugabegeschwindigkeit des wässrigen Alkalis nicht kritisch ist, die Zugabegeschwindigkeit des Methylierungsmittels hingegen definiert wird.

Es handelt sich bei der Vorgehensweise der WO 00/59947 um ein echtes zweistufiges Verfahren, welches sich durch die Schritte Alkalisierung, Methylierung, Alkalisierung, Methylierung auszeichnet.

Diese Vorgehensweise wird auch durch die in der WO 00/5997 beschriebenen Beispiele bestätigt.

Ein vergleichbares zweistufiges Verfahren zur Herstellung von Methylcellulose beschreibt die DE-A 1060374. Es wird aus Alkalicellulose durch Einwirkung von Chlormethan Methylcellulose hergestellt, diese wird im unmittelbaren Anschluss erneut alkalisiert und mit überschüssigem Chlormethan weiterveräthert.

Die US-A-4,456,751 und die US-A-4,477,657 beschreiben Verfahren, worin die Alkalicellulose zunächst mit einem Alkylenoxid umgesetzt wird, anschließend mit einem Alkylhalogenid und gegebenenfalls wiederum mit einem Alkylhalogenid. Bei diesen Verfahren ist in der ersten Reaktionsphase kein Chlormethan oder inertes Lösungsmittel als Slurry anwesend.

Die EP-A-1279680 und EP-A-1180526 beschreiben Verfahren zur Herstellung von Alkylhydroxyalkylcellulose unter optimierter Zugabereihenfolge der benötigten Reagenzien. In den hier beschriebenen Verfahren werden hohe Reagenzausbeuten, insbesondere bezüglich der Alkylenoxide durch stark abgesenkte Einsatzmengen an Alkylchlorid in der ersten Reaktionsphase verwirklicht. Dieses wird entweder durch eine geringe Alkylchloridkonzentration im Slurry oder eine geringe Einsatzmenge an Slurry erreicht. Beides ist für eine großtechnische Herstellung ungünstig, da in einem Fall kein recycliertes Slurrygemisch eingesetzt werden kann und im anderen Fall die für eine ausreichende Wärmeabfuhr notwendige Slurrymenge nicht ausreicht. Somit können die hier beschriebenen Verfahren nicht für hochsubstituierte MHAC in großtechnischen Produktionsanlagen genutzt werden.

US 2003/0065165, US 6,235,893 und US 4,450,161 betreffen Verfahren zur Herstellung von Alkylhydroxyalkylcelluloseethern.

Aufgabe der nachfolgend beschriebenen Erfindung war die Bereitstellung eines industriellen Verfahrens zur Herstellung von Methylhydroxyalkylcellulosederivaten, wie z.B. Methylhydroxyethylcellulose und Methylhydroxypropylcellulose, das den Einsatz einer hohen Einsatzmenge an Suspensionsmedium (Slurry) in der ersten Reaktionsphase erlaubt, zusätzlich einen hohen stoichiometrischen Überschusses an Chlormethan relativ zum eingesetzten Alkalihydroxid im letzten Veretherungsschritt ermöglicht, und den Einsatz des Abgases eines Batches in den nächsten Batch ohne zusätzliche Aufarbeitungsschritte des Abgases erlaubt und hierbei gute Reagenzausbeuten der eingesetzten Edukte liefert.

Bei einem batchweise arbeitendem Verfahren werden je nach angestrebtem Substitutionsgrad unterschiedliche Mengen an Alkalihydroxid (als wässrige Lauge), Chlormethan, und Hydroxyalkylierungsreagenzien wie beispielsweise Ethylenoxid und Propylenoxid mit der Cellulose zu einer MC oder MHAC umgesetzt.

Hierzu werden im Allgemeinen folgende Schritte durchlaufen.
- Füllen des Reaktors mit Cellulose
- Inertisieren der Cellulose
- Zugabe eines Suspensionsmittels
- Besprühen der Cellulose mit Lauge (Alkalisierung)
- Veretherung der Cellulose bei erhöhter Temperatur (größer 40 °C)
- Aufsprühen von Reagenzien
- Abdestillieren flüchtiger Substanzen (Abgas des Batches)
- Ablassen des rohen Celluloseethers zur Wäsche (ggf. nach Zugabe von heißem Waschwasser)

Beispiele für geeignete Reaktoren für solche Verfahren sind Reaktoren vom Typ Druvatherm DVT der Firma Lödige. Für großtechnische Produktionsanlagen weisen diese Reaktoren ein Volumen von mindestens 10 m³ auf. Bevorzugt werden sogar noch größere Reaktoren eingesetzt.

Die Erfindung betrifft ein Verfahren zur industriellen Herstellung von Methylhydroxyalkylcellulose (MHAC) aus Cellulose in Gegenwart von Alkali mit Chlormethan und Hydroxyalkylierungsmittel, dadurch gekennzeichnet, dass man
a) in einem Autoklaven die Cellulose mit wässriger AlkalihydroxidLösung und einem Suspensionsmittel, welches zwischen 20 und 50 Gew.-% Chlormethan enthält, besprüht, wobei 1,5 bis 4,0 Teile Suspensionsmittel je Teil Cellulose eingesetzt werden, und die so alkalisierte Cellulose mit dem Chlormethan umsetzt,
b) oder mehrere Hydroxyalkylierungsmittel bei einer Temperatur größer 60°C zudosiert und
c) alihydroxid bis zu einer überstoichiometrischen Menge von mindestens +0,1 eq bis +4,5 eq, bezogen auf das im Schritt a) eingesetzte Chlormethan, zugibt, dann
d) ein oder mehrere Hydroxyalkylierungsmittel bei einer Temperatur größer 60°C zugibt und mindestens 20 min umsetzen lässt, wobei die Gesamtmenge an Hydroxyalkylierungsmittel in Schritt b) und d) 0,02 bis 5 eq (pro AGU) beträgt, und
e) Chlormethan bis zu einer überstoichiometrischen Menge von mindestens +0,4 eq bis +4,0 eq, bezogen auf das in den Schritten a) und c) gesamt eingesetzte Alkalihydroxid, zudosiert,
f) weiter Alkalihydroxid zugibt und die Reaktion bei einer Temperatur im Bereich von 60 bis 110°C umsetzen lässt und dann
das Suspensionsmittel mit dem restlichen Chlormethan abdestilliert und das erhaltene Produkt isoliert, wäscht und trocknet.

Die Zugabe des Alkalihydroxid in Schritt a), c) oder f) kann in Teilschritten erfolgen. Die Zugabe von einem oder mehreren Hydroxyalkylierungsmitteln erfolgt im Schritt b) oder d).

Das erfindungsgemäße Verfahren dient zur Herstellung von binären, ternären und quarternären Methylhydroxyalkylcellulosen (MHAC), bevorzugt zur Herstellung der binären Derivate Methylhydroxyethylcellulose (MHEC) und Methylhydroxypropylcellulose (MHPC), besonders bevorzugt zur Herstellung von Methylhydroxypropylcelluose.

Als inertes Suspensionsmittel kommt Dimethylether (DME) oder bevorzugt ein Gemisch aus DME und Chlormethan (MeCl) zum Einsatz.

Die Alkalisierung der Cellulose erfolgt mit anorganischen Basen, bevorzugt mit Alkalihydroxiden in wässriger Lösung, wie Natriumhydroxid und Kaliumhydroxid, bevorzugt mit 35 bis 60 %iger Natronlauge, besonders bevorzugt mit 48 bis 52 %iger Natronlauge.

Der eigentliche Veretherungsschritt der Cellulose bei erhöhter Temperatur dauert in Abhängigkeit des gewünschten Substitutionsgrades 1,5 bis 6 Stunden.

Vor, während oder nach der Alkalisierung wird Suspensionsmittel z.B. bestehend aus DME und MeCl zu dem Gemisch gegeben. Das Suspensionsmittel besteht beim Einsatz eines DME/MeCI-Gemisches zu mindestens 25 Gew.-% MeCl bezogen auf das Gesamtgewicht Suspensionsmittel. Das Suspensionsmittel besteht bevorzugt zu mindestens 30 Gew.-%, insbesondere zu mindestens 35 Gew.-% bezogen auf das Gesamtgewicht aus MeCl. Jedoch besteht das Suspensionsmittel bevorzugt zu nicht mehr als 50 Gew.-% aus MeCl.

Die Menge an Suspensionsmittel beträgt 1,0 bis 4,0 Teile je Teil Cellulose. Unter Teile sind hier Gewichtsteile zu verstehen. Bevorzugt werden 2 bis 3,5 Teile Suspensionsmittel je Teil Cellulose eingesetzt.

Bei dem Suspensionsmittel handelt es sich um recycliertes Abgas eines vorangegangenen Batches. Das Suspensionsmittel kann ggf. mit weiterem MeCl bezüglich des MeCl-Gehaltes angereichert werden.

Im Schritt a) wird die Reaktion von Alkalicellulose mit Chlormethan durchgeführt. Das Chlormethan stammt gesamt oder teilweise aus dem Suspensionsmittel. Die Menge an Chlormethan wird im molaren Überschuss bezogen auf die eingesetzte Menge Alkalihydroxid (NaOH I) eingesetzt.

Die bevorzugte Einsatzmenge Chlormethan (MeCl) berechnet sich gemäss: mol eq NaOH I + 0,2 bis mol eq NaOH I + 3,0. Die besonders bevorzugte Einsatzmenge Chlormethan berechnet sich gemäss: mol eq NaOH I + 0,3 bis mol eq NaOH I + 2,0. Die am meisten bevorzugte Einsatzmenge Chlormethan berechnet sich gemäss: mol eq NaOH I + 0,4 bis mol eq ges. NaOH + 1,0.

Zum Beispiel liegt die bevorzugte Einsatzmenge Chlormethan bei einer im Schritt a) eingesetzten Menge Alkalihydroxid (NaOH I) von 2,3 mol eq. (pro AGU) zwischen 2,5 und 5.3 mol eq (pro AGU).

Geeignete Hydroxyalkylierungsmittel zum Einführen von Hydroxyalkylgruppen sind beispielsweise Ethylenoxid (EO), Propylenoxid (PO), Butylenoxid (BO). Besonders bevorzugt ist Propylenoxid und Ethylenoxid. Es können auch mehrere Hydroxyalkylierungsmittel in einen Batch zur Herstellung von ternären Methylcellulosederivaten wie beispielsweise Methylhydroxyethylhydroxybutylcellulose eingesetzt werden.

Bei der praktischen Durchführung des Verfahrens wird gemahlene oder zerfaserte Cellulose im Regelfall inertisiert vorgelegt.

In Schritt c) erfolgt die Dosierung von Alkalihydroxid (NaOH II) in mindestens der Menge, welche ein überstoichiometrisches Verhältnis Alkalihydroxid (mindestens mol eq MeCl + 0,1) zu Methylchlorid (MeCl I) einstellt. Die bevorzugte Einsatzmenge NaOH stellt ein überstoichiometrisches Verhältnis mol eq MeCl + 0,2 bis + 4,5 ein. Die besonders bevorzugte Einsatzmenge NaOH stellt ein überstoichiometrisches Verhältnis mol eq MeCl + 0,4 bis + 2,5 ein. Die Dosierung des Alkalihydroxid erfolgt als wässrige Lösung bei Reaktionstemperatur. Somit kann nicht zwischen Zugabe und Reaktionsphase unterschieden werden. Die Dosierung des Alkalihydroxids in Schritt c) kann in ein oder mehreren Schritten erfolgen. Bevorzugt wird NaOH in Form einer 35 bis 60 gewichtsprozentigen wässrigen Lösung eingesetzt, besonders bevorzugt als 48 bis 52 %ige Natronlauge.

Die Zugabe des Alkalihydroxids in Schritt c) und f) erfolgt bei Reaktionstemperatur. Die Zugabegeschwindigkeit des Alkalihydroxids beträgt 0,01 bis 0,4 mol eq pro Minute. Die Zugabegeschwindigkeit des Alkalihydroxids beträgt bevorzugt 0,02 bis 0,2 mol eq pro Minute. Die Zugabegeschwindigkeit des Alkalihydroxids beträgt besonders bevorzugt 0,04 bis 0,1 mol eq pro Minute.

Alkylenoxid wird als Hydroxyalkylierungsmittel während des Schrittes b) und zusätzlich zwischen dem Schritt c) und e) zugegeben. Ggf. kann das Alkylenoxid in mehreren Schritten zudosiert werden.

Besonders bevorzugt wird Propylenoxid als Alkylenoxid zudosiert.

Die Zugabe des Hydroxyalkylierungsmittels Alkylenoxid erfolgt bei Reaktionstemperatur. Die Zugabegeschwindigkeit des Alkylenoxids beträgt 0,01 bis 0,4 mol eq pro Minute. Die Zugabegeschwindigkeit des Alkylenoxids beträgt bevorzugt 0,02 bis 0,2 mol eq pro Minute. Die Zugabegeschwindigkeit des Alkylenoxids beträgt besonders bevorzugt 0,04 bis 0,1 mol eq pro Minute.

Gegebenenfalls können mehrere Alkylenoxide nacheinander oder gleichzeitig oder gemischt zugegeben werden. Die Zugabegeschwindigkeit bezieht sich in diesem Fall auf die Summe der Alkylenoxide.

Die Reaktion mit dem Hydroxyalkylierungsmittel und Chlormethan erfolgt bei 60 bis 110°C, bevorzugt bei 65 bis 90°C, besonders bevorzugt bei 75 bis 85 °C.

Je nach angestrebter Substitutionshöhe wird die Zugabemenge an Hydroxyalkylierungsmittel gezielt eingestellt. Für die in verschiedenen Anwendungsbereichen derzeit gängig eingesetzten MHEC-Produkte liegt die anzuwendende Menge an Hydroxyalkylierungsmittel bei 0,02 bis 5 eq pro AGU, bevorzugt bei 0,05 bis 1,0 eq pro AGU, besonders bevorzugt bei 0,1 bis 0,7 eq pro AGU. Hierdurch werden MHEC mit einem MS (HE) von 0,02 bis 1,2, bevorzugt mit einem MS (HE) von 0,03 bis 0,8 und besonders bevorzugt mit einem MS (HE) von 0,05 bis 0,6 hergestellt.

Bevorzugt werden MHPC nach dem erfindungsgemäßen Verfahren hergestellt. Für die in verschiedenen Anwendungsbereichen derzeit gängig eingesetzten MHPC-Produkte liegt die anzuwendende PO Menge bei 0,05 bis 5 eq pro AGU, bevorzugt bei 0,5 bis 4 eq pro AGU, besonders bevorzugt bei 1,0 bis 3 eq pro AGU. Hierdurch werden MHPC mit einem MS (HP) von 0,05 bis 3,3, bevorzugt mit einem MS (HP) von 0,2 bis 1,8 und besonders bevorzugt mit einem MS (HP) von 0,4 bis 1,2 hergestellt. Die Zugabe des Hydroxyalkylierungsmittels zum Reaktionssystem kann in einem oder portioniert in mehreren Dosierschritten erfolgen.

In Schritt e) erfolgt die Zugabe von Chlormethan (MCl II) in mindestens der Menge, welche ein überstoichiometrisches Verhältnis Chlormethan zu gesamt Alkalihydroxid (ges. NaOH) von mol eq ges. NaOH + 0,4 bis + 4,0 einstellt. Die besonders bevorzugte Einsatzmenge Chlormethan stellt ein überstoichiometrisches Verhältnis mol eq ges. NaOH + 0,8 bis + 2,5 ein.

Bevorzugt entspricht die molare Einsatzmenge MCl II der molaren Einsatzmenge gesamt Alkalihydroxid mol eq ges. NaOH - 1,2 bis mol eq ges. NaOH + 0,6. Bevorzugt entspricht die molare Einsatzmenge MCl II der molaren Einsatzmenge gesamt Alkalihydroxid mol eq ges. NaOH - 0,8 bis mol eq ges. NaOH + 0,2. Die Zugabe des Chlormethan erfolgt bei Reaktionstemperatur.

Somit kann nicht zwischen Zugabe und Reaktionsphase unterschieden werden. Die Zugabe des Chlormethan erfolgt bei einer Temperatur größer 65 °C, bevorzugt bei 75 bis 90 °C.

Das Chlormethan kann in verdünntem Zustand zusammen mit weiterem Suspensionsmittel DME, dosiert werden.

In Schritt f) erfolgt die Zugabe von weiterem Alkalihydroxid, wobei ein überstoichiometrisches Verhältnis von insgesamt eingesetztem Chlormethan zu insgesamt eingesetztem Alkalihydroxid beibehalten wird.

Nach Ende der Veretherung werden alle flüchtigen Bestandteile destillativ unter ggf. Anwendung von vermindertem Druck abgetrennt. Die flüchtigen Bestandteile werden kondensiert und können als Suspensionsmedium in den folgenden Ansatz eingesetzt werden.

Die Reinigung, Trocknung und Mahlung des resultierenden Produktes erfolgt nach den in der Cellulosederivat-Technologie üblichen Methoden gemäß dem Stand der Technik.

Die nachfolgenden Beispiele sollen das erfindungsgemäße Verfahren erläutern und die resultierenden Produkte beschreiben, ohne die Erfindung zu beschränken:

### Beispiele

In den folgenden Beispielen steht die Einheit'eq' für das molare Verhältnis des jeweiligen Einsatzstoffes relativ zur Anhydroglucoseeinheit (AGU) der eingesetzten Cellulose.

### Beispiele 1 bis 4

In einem Autoklaven wurden 0,5 Gew.-Teile Holzzellstoff und 0,5 Gew.-Teile Baumwollinters durch Evakuieren und Beaufschlagen mit Stickstoff inertisiert.

Anschließend wurde in Schritt a) ein Gemisch aus Dimethylether und Chlormethan in den Reaktor dosiert, welches zu ca. 40 Gew.-% Chlormethan bezogen auf die Gesamtmasse des Suspensionsmediums bestand. Insgesamt wurden ca. 2,1 Gew.-Teile dieses Suspensionsmediums bezogen auf die eingesetzte Cellulosemenge dosiert. Es wurde Natriumhydroxid in Form einer 50 gew.-%igen wässrigen Natronlauge unter Mischen auf die Cellulose gesprüht. Anschließend wurde in Schritt b) Propylenoxid in den Reaktor dosiert. Dabei wurde das Gemisch auf ca. 75°C geheizt.

Anschließend wurde in Schritt c) bei einer Reaktionstemperatur von ca. 75°C Natriumhydroxid in Form einer 50 gew.-%igen wässrigen Natronlauge dosiert. Hierdurch wurde ein Stoichiometriewechsel herbeigeführt (Beispiele 1 bis 3).

Im Anschluss an wurde in Schritt d) weiteres Propylenoxid bei einer Reaktionstemperatur von 75°C in den Reaktor dosiert.

Anschließend wurde 70 min unter Mischen reagieren gelassen.

Dann wurde in Schritt e) binnen 20 Minuten Chlormethan in den Reaktor dosiert und gleichzeitig auf ca. 85 °C Reaktionstemperatur geheizt. Hierdurch wurde ein erneuter Stoichiometriewechsel herbeigeführt (Beispiele 1 bis 3).

Danach wurde in Schritt f) bei einer Reaktionstemperatur von ca. 85°C Natriumhydroxid in Form einer 50 gew.-%igen wässrigen Natronlauge dosiert.

Anschließend wurde weitere 50 Minuten bei ca. 85°C umgesetzt.

Die flüchtigen Bestandteile wurden abdestilliert, wobei teilweise unter vermindertem Druck gearbeitet wurde. Das so erhaltene Abgas wurde kondensiert und enthielt zu ca. 32 Gew.-% Methylchlorid bezogen auf die Gesamtmasse. Das Abgas konnte ohne weitere Aufarbeitungsschritte als Suspensionsmedium für den nachfolgenden Reaktionsansatz genutzt werden.

Das Rohprodukt wurde einer Wäsche mit heißem Wasser unterworfen, anschließend getrocknet und gemahlen.

Die Einsatzmengen an Veretherungsreagenzien in den einzelnen Reaktionsschritten sind in Tabelle 1 angegeben.

**Tabelle 1**

| **Beispiel** | **Schritt a)** | | **Schritt b)** | **Schritt c)** | **Schritt d)** | **Schritt e)** | **Schritt f)** | **Vergleich/ Erfindung** |
|---|---|---|---|---|---|---|---|---|
| | **MeCL** | **NaOH I** | **PO** | **NaOH II** | **PO** | **MeCl** | **NaOH III** | |
| 1 | 2,7 | 2,3 | 1,5 | 0,6 | 1,5 | 4,2 | 2,1 | E |
| 2 | 2,7 | 1,7 | 1,5 | 1,2 | 1,5 | 4,2 | 2,1 | E |
| 3 | 2,7 | 1,7 | 1,5 | 1,2* | 1,5** | 4,2 | 2,1 | E |
| 4 | 2,7 | 1,7 | 1,5 | 0 | 1,5 | 4,2 | 3,3 | V |

| | | | | | | | | |
|---|---|---|---|---|---|---|---|---|
| * Zugabe des NaOH erfolgte in zwei Teilschritten je 0,6 mol eq ** Zugabe des PO erfolgte zwischen den Teilschritten NaOH II | | | | | | | | |

Die Dosiergeschwindigkeiten betrugen 0,04 bis 0,06 mol eq pro Minute für Propylenoxid in Schritt b) und d).sowie für Natriumhydroxid in Schritt c) und f).

Der Substitutionsgrad durch Methylgruppen (DS-M), der Substitutionsgrad durch Hydroxypropylgruppen (MS-HP) der so erhaltenen Hydroxypropylmethylcelluloseether sind in Tabelle 2 gelistet Die Viskosität (V2) in 2 %iger wässriger Lösung (D= 2,55s⁻¹, 20 °C, Rotationsviskosimeter) der Produkte betrug ca. 60.000 mPas. Der NaCl-Gehalt betrug bei allen Produkten < 0,5 Gew.-%.

**Tabelle 2**

| Beispiel | DSM | MS HP | Vergleich/ Erfindung |
|---|---|---|---|
| 1 | 1,98 | 0,88 | E |
| 2 | 1,90 | 0,87 | E |
| 3 | 1,95 | 0,93 | E |
| 4 | 1,89 | 0,70 | V |

Das Vergleichsbeispiel 4 gemäss der EP 1279680 weist einen deutlich geringeren Substitutionsgrad auf als die Beispiele nach dem erfindungsgemäßen Verfahren. Insbesondere war beim Vergleichsbeispiel 4 ein heftiger Temperatur- und Druckanstieg im Anschluss an Schritt c), insbesondere in Schritt d) zu verzeichnen, welcher kaum mehr zu beherrschen war.

## Patentansprüche

1. Verfahren zur industriellen Herstellung von Methylhydroxyalkylcellulose (MHAC) aus Cellulose in Gegenwart von Alkali mit Chlormethan und Hydroxyalkylierungsmittel, **dadurch gekennzeichnet, dass** man
a) in einem Autoklaven die Cellulose mit wässriger Alkalihydroxid-Lösung und einem Suspensionsmittel, welches zwischen 20 und 50 Gew.-% Chlormethan enthält, besprüht, wobei 1,5 bis 4,0 Teile Suspensionsmittel je Teil Cellulose eingesetzt werden, und die so alkalisierte Cellulose mit dem Chlormethan umsetzt,
b) ein oder mehrere Hydroxyalkylierungsmittel bei einer Temperatur grösser 60°C zudosiert und
c) Alkalihydroxid bis zu einer überstoichiometrischen Menge von mindestens +0,1 eq bis +4,5 eq, bezogen auf das im Schritt a) eingesetzte Chlormethan, zugibt, dann
d) ein oder mehrere Hydroxyalkylierungsmittel bei einer Temperatur grösser 60°C zugibt und mindestens 20 min umsetzen lässt, wobei die Gesamtmenge an Hydroxyalkylierungsmittel in Schritt b) und d) 0,02 bis 5 eq (pro AGU) beträgt, und
e) Chlormethan bis zu einer überstoichiometrischen Menge von mindestens +0,4 eq bis +4,0 eq, bezogen auf das in den Schritten a) und c) gesamt eingesetzte Alkalihydroxid, zudosiert,
f) weiter Alkalihydroxid zugibt und die Reaktion bei einer Temperatur im Bereich von 60 bis 110°C umsetzen lässt und dann
das Suspensionsmittel mit dem restlichen Chlormethan abdestilliert und das erhaltene Produkt isoliert, wäscht und trocknet.

2. Verfahren nach Anspruch 1, **dadurch gekennzeichnet, dass** die MHAC eine Methylhydroxyethylcellulose (MHEC) oder Methylhydroxypropylcellulose (MHPC) ist.

3. Verfahren nach Anspruch 1 oder 2, **dadurch gekennzeichnet, dass** das Suspensionsmittel ein Gemisch aus Dimethylether und mindestens 25 Gew.-% Chlormethan, bezogen auf das Gesamtgewicht des Suspensionsmittels, ist,

4. Verfahren nach einem der vorherigen Ansprüche, **dadurch gekennzeichnet, dass** das Alkalihydroxid eine 35 bis 60 %ige wässrige Lösung von NaOH ist,

5. Verfahren nach einem der vorherigen Ansprüche, **dadurch gekennzeichnet, dass** die Zugabegeschwindigkeit des Alkalihydroxids in Schritt c) und f) 0,01 bis 0,4 mol eq (pro AGU) pro Minute beträgt.

6. Verfahren nach einem der vorherigen Ansprüche, **dadurch gekennzeichnet, dass** die Zugabegeschwindigkeit des Hydroxyalkylierungsmittela 0,01 bis 0,4 mol eq (pro AGU) pro Minute beträgt.

## Claims

1. A process for the industrial production of methylhydroxyalkyl cellulose (MHAC) from cellulose in the presence of alkali with chloromethane and hydroxyalkylating agent, **characterized in that** it comprises:
(a) spraying the cellulose in an autoclave with an aqueous alkali metal hydroxide solution and a suspension medium comprising 20 wt.% to 50 wt.% of chloromethane, whereby the suspension medium is introduced in an amount of 1.5 to 4.0 parts per part of cellulose, thereby alkalizing the cellulose and reacting the cellulose with chloromethane;
(b) introducing one or more hydroxyalkylating agent(s) at a temperature above 60°C;
(c) introducing alkali metal hydroxide in a hyperstoichiometric quantity of at least +0.1 eq. to 4.5 eq., in relation to the chloromethane utilised; then
(d) introducing one or more hydroxyalkylating agent(s) at a temperature above 60°C, and allowing it to react for at least 20 min, with the total amount of hydroxyalkylating agent in steps b) and d) being 0.02 to 5 eq. (per AGU), and
(e) introducing chloromethane in a hyperstoichiometric quantity of at least + 0.4 eq. to 4.0 eq., in relation to the total alkali metal hydroxide utilised in steps a) and c)
(f) further introducing alkali metal hydroxide and allowing reaction to continue at a temperature of from 60°C to 110°C; and then
removing said suspension medium with the remaining chloromethane by distillation, and isolating, washing and drying the obtained product.

2. The process according to claim 1, **characterized in that** the MHAC is a methylhydroxyethyl cellulose (MHEC) or methylhydroxypropyl cellulose (MHPC).

3. The process according to claim 1 or claim 2, **characterized in that** the suspension medium is a mixture of dimethyl ether and at least 25 wt.-% of chloromethane, based on the total weight of the suspension medium.

4. The process according to any one of the preceding claims, **characterized in that** the alkali metal hydroxide is a 35 to 60 wt.-% aqueous solution of NaOH.

5. The process according to any one of the preceding claims, **characterized in that** in steps c) and f) the alkali hydroxide ((alkali metal hydroxide?)) is introduced at a rate of 0.01 to 0.4 mol eq. (per AGU) per minute.

6. The process according to any one of the preceding claims, **characterized in that** the hydroxyalkylating agent is introduced at a rate of 0.01 to 0.4 mol eq. (per AGU) per minute.

## Revendications

1. Procédé de production industrielle de méthylhydroxyalkylcellulose (MHAC) à partir de cellulose en présence d'alcali avec du chlorométhane et un agent d'hydroxyalkylation, **caractérisé en ce**
a) **que**, dans un autoclave, l'on asperge la cellulose d'une solution aqueuse d'hydroxyde alcalin et d'un agent de suspension, lequel contient entre 20 et 50 % en poids de chlorométhane, sachant que l'on utilise de 1,5 à 4,0 parties d'agent de suspension par partie de cellulose, et que la cellulose ainsi alcalinisée réagit avec le chlorométhane,
b) **que** l'on ajoute de manière dosée un ou plusieurs agents d'hydroxyalkylation à une température supérieure à 60 °C et
c) **que** l'on ajoute de l'hydroxyde alcalin jusqu'à une quantité surstoechiométrique allant d'au moins +0,1 éq à +4,5 éq, rapporté au chlorométhane utilisé à l'étape a), puis
d) **que** l'on ajoute un ou plusieurs agents d'hydroxyalkylation à une température supérieure à 60°C et que l'on laisse réagir au moins 20 min, sachant que la quantité totale d'agent d'hydroxyalkylation va de 0,02 à 5 éq (par AGU) à l'étape b) et d), et
e) **que** l'on ajoute de manière dosée du chlorométhane jusqu'à une quantité surstoechiométrique allant d'au moins +0,4 éq à +4,0 éq, rapporté à tout l'hydroxyde alcalin utilisé aux étapes a) et c),
f) **que** l'on ajoute encore de l'hydroxyde alcalin et que l'on laisse réagir la réaction à une température située dans la gamme allant de 60 à 110 °C et ensuite
**que** l'on chasse par distillation l'agent de suspension avec le chlorométhane restant et que l'on isole, lave et sèche le produit ainsi obtenu.

2. Procédé selon la revendication 1, **caractérisé en ce que** la MHAC est une méthylhydroxyéthylcellulose (MHEC) ou méthylhydroxypropylcellulose (MHPC).

3. Procédé selon la revendication 1 ou 2, **caractérisé en ce que** l'agent de suspension est un mélange d'éther diméthylique et d'au moins 25 % en poids de chlorométhane, rapporté au poids total de l'agent de suspension.

4. Procédé selon l'une des revendications précédentes, **caractérisé en ce que** l'hydroxyde alcalin est une solution aqueuse contenant de 35 à 60 % de NaOH.

5. Procédé selon l'une des revendications précédentes, **caractérisé en ce que** la vitesse d'ajout de l'hydroxyde alcalin à l'étape c) et f) va de 0,01 à 0,4 éq molaire (par AGU) par minute.

6. Procédé selon l'une des revendications précédentes, **caractérisé en ce que** la vitesse d'ajout de l'agent d'hydroxyalkylation va de 0,01 à 0,4 éq molaire (par AGU) par minute.
